(19) **Europäisches Patentamt / European Patent Office / Office européen des brevets**

(11) **EP 2 050 110 B1**

(12) **EUROPÄISCHE PATENTSCHRIFT**

(45) Veröffentlichungstag und Bekanntmachung des Hinweises auf die Patenterteilung:
**03.08.2020 Patentblatt 2011/31**

(21) Anmeldenummer: **07765164.4**

(22) Anmeldetag: **11.07.2007**

(51) Int Cl.:
*H01H 3/02* (2006.01)    *H01H 9/16* (2006.01)
*B60Q 1/34* (2006.01)    *G01D 5/165* (2006.01)
*H01C 10/36* (2006.01)

(86) Internationale Anmeldenummer:
**PCT/EP2007/006144**

(87) Internationale Veröffentlichungsnummer:
**WO 2008/017357 (14.02.2008 Gazette 2008/07)**

(54) **SCHALTUNGSANORDNUNG**

CIRCUIT ARRANGEMENT

CIRCUIT

(84) Benannte Vertragsstaaten:
**DE FR GB IT SE**

(30) Priorität: **11.08.2006 DE 102006038375**

(43) Veröffentlichungstag der Anmeldung:
**22.04.2009 Patentblatt 2009/17**

(73) Patentinhaber: **Valeo Schalter und Sensoren GmbH**
**74321 Bietigheim-Bissingen (DE)**

(72) Erfinder:
• **MÜLLER, Stefan**
**97944 Boxberg (DE)**
• **HAAS, Philipp**
**89134 Blaustein (DE)**
• **KONRAD, Andreas**
**74357 Bönnigheim (DE)**

(56) Entgegenhaltungen:
**EP-A- 1 551 047    EP-A2- 0 910 105**
**DE-C1- 10 108 605**

**Beschreibung**

Die Erfindung betrifft eine Schaltungsanordnung zur Auswertung von mindestens zwei Schaltzuständen eines Schalters, wobei eine erste Auswerteschaltung vorgesehen ist, und wobei über ein bewegbares Kontaktmittel des Schalters verschiedene Knotenpunkte der ersten Auswerteschaltung in Abhängigkeit des jeweiligen Schaltzustands miteinander und/oder mit einem vorgebbaren Bezugspotential verbindbar sind.

EP 0910 105 A2 offenbert eine Schaltungsanordnung gemäß dem Oberbegriff des Anspruchs 1.

Derartige Schaltungsanordnungen sind bekannt und werden beispielsweise zur Auswertung der Schaltzustände von Lenkstockschaltern verwendet, die unter anderem zur Fahrtrichtungsanzeige oder auch zur Betätigung einer Scheibenwischeranlage eines Kraftfahrzeugs oder dergleichen eingesetzt werden.

Bei bekannten Systemen wird die Auswertung eines Schaltzustands beziehungsweise einer entsprechenden Schalterstellung entweder digital oder analog ausgeführt. Hierbei werden über das Kontaktmittel des Schalters in Abhängigkeit des jeweiligen Schaltzustands verschiedene Knotenpunkte der Auswerteschaltung miteinander verbunden, wodurch sich die elektrische Konfiguration der Auswerteschaltung ändert; diese Änderung ist wie bereits beschrieben digital oder analog auswertbar, beispielsweise durch einen Mikrocontroller.

Die digitale Auswertung von Schaltzuständen hat jedoch den Nachteil, dass relativ viele digitale Eingänge eines den Schaltzustand auswertenden Mikrocontrollers erforderlich sind, um alle möglichen Schaltzustände gängiger Lenkstockschalter oder sonstiger Betätigungselemente zu erfassen.

Bei einer herkömmlichen analogen Auswertung der Schaltzustände kann es insbesondere aufgrund einer sich verschlechternden Kontaktqualität zwischen dem Kontaktmittel und mit dem Kontaktmittel zusammenwirkenden Kontaktflächen der Auswerteschaltung zu einer fehlerhaften Auswertung kommen. Eine Verschlechterung der Kontaktqualität kann beispielsweise durch eine Materialverschleppung, eine Kontaktverschmutzung oder -korrosion entstehen.

Beispielsweise führt das Auftreten eines unzulässig hohen Kontaktwiderstands zwischen dem Kontaktmittel und einer ihm in einer bestimmten Schalterstellung zugeordneten Kontaktfläche zu einer entsprechenden Spannungsverschiebung bei der herkömmlichen analogen Auswertung, so dass Fehlzuordnungen der analog erfassten Größe, insbesondere einer Spannung, zu den Schaltzuständen des Schalters getroffen werden. Insbesondere bei sicherheitskritischen Anwendungen wie beispielsweise bei einem Schalter eines Fahrtrichtungsanzeigers eines Kraftfahrzeugs kann dadurch der Fall auftreten, dass eine über den Fahrtrichtungsanzeiger gewählte Signalisierungsrichtung falsch ausgewertet wird und z.B. ein Blinksignal in der anderen als der von dem Fahrer gewählten Richtung ausgegeben wird, wodurch eine Gefährdung des Fahrers sowie gegebenenfalls weiterer Verkehrsteilnehmer gegeben ist.

Demgemäß ist es Aufgabe der vorliegenden Erfindung, eine Schaltungsanordnung der eingangs genannten Art dahingehend zu verbessern, dass sie auch bei einer Verschlechterung der Kontaktqualität im Bereich des Kontaktmittels beziehungsweise ihm zugeordneter Kontaktflächen eine gesteigerte Sicherheit gegenüber Fehlauswertungen bietet.

Diese Aufgabe wird bei einer Schaltungsanordnung der eingangs genannten Art erfindungsgemäß dadurch gelöst, dass zusätzlich zu der ersten Auswerteschaltung auch eine zweite Auswerteschaltung vorgesehen ist, und dass bei mindestens einem Schaltzustand des Schalters Knotenpunkte der zweiten Auswerteschaltung in Abhängigkeit des Schaltzustands miteinander und/oder mit einem vorgebbaren Bezugspotential verbindbar sind.

Durch das erfindungsgemäße Vorsehen zweier separater Auswerteschaltungen ist es vorteilhaft möglich, mindestens einen ersten Schaltzustand allein durch die erste Auswerteschaltung auszuwerten, und mindestens einen zweiten beziehungsweise weiteren Schaltzustand allein durch die zweite Auswerteschaltung auszuwerten. Dadurch wird das von den herkömmlichen Systemen bekannte Problem vermieden, dass eine aufgrund von Kontaktverschlechterungen auftretende Veränderung eines den Schaltzustand repräsentierenden Analogsignals während der Auswertung dazu führt, dass auf einen falschen Schaltzustand geschlossen wird.

Beispielsweise ist es durch die Verwendung der erfindungsgemäßen Schaltungsanordnung bei der Realisierung eines Schalters für einen Fahrtrichtungsanzeiger möglich, diejenigen Schaltzustände der ersten Auswerteschaltung zuzuordnen, die mit einer ersten Fahrtrichtung korrespondieren. Die mit einer zweiten Fahrtrichtung korrespondierenden Schaltzustände können dementsprechend der zweiten Auswerteschaltung zugeordnet werden. Hierdurch wird mit Sicherheit vermieden, dass eine aufgrund sich verschlechternder Kontakte erfolgende fehlerhafte Auswertung in der ersten Auswerteschaltung irrtümlicherweise zu einer Verwechslung der zu signalisierenden Fahrtrichtung führt. Eine Kontaktverschlechterung oder dergleichen würde bei der Verwendung der erfindungsgemäßen Schaltungsanordnung lediglich dazu führen, dass das betreffende Richtungssignal unter Umständen nicht richtig ausgewertet bzw. interpretiert wird was beispielsweise auf einen Fehlereintrag eines zugeordneten Steuergeräts führt. Eine Verwechslung mit einem die andere Fahrtrichtung anzeigenden Signal ist jedoch ausgeschlossen, da die Auswertung solcher Signale exklusiv über die andere Auswerteschaltung erfolgt, und die beschriebenen Fehler die voneinander unabhängige Signalauswertung durch die erste und zweite Auswerteschaltung nicht beeinflussen können.

Bei einer sehr vorteilhaften Ausführungsform der erfindungsgemäßen Schaltungsanordnung ist vorgesehen, dass ein oder mehrere Knotenpunkte der ersten und/oder zweiten Auswerteschaltung mit Kontaktflächen verbunden sind, die zur Kontaktierung mit dem Kontaktmittel des Schalters dienen. Dadurch ist eine einfache Möglichkeit gegeben, über ein beispielsweise hin- und herbewegbares Kontaktmittel je nach Schaltzustand unterschiedliche mit den jeweiligen Kontaktflächen verbundene Knotenpunkte der betreffenden Auswerteschaltung miteinander zu verbinden. Die Kontaktflächen sowie das Kontaktmittel sind vorzugsweise jeweils aus einem geeigneten Kontaktwerkstoff gebildet, der eine für die vorgesehene Auswertung hinreichend große elektrische Leitfähigkeit aufweist bzw. einen entsprechend geringen Kontaktwiderstand ermöglicht.

Ganz besonders vorteilhaft kann bei einer weiteren Ausführungsform der erfindungsgemäßen Schaltungsanordnung eine erste Gruppe von Kontaktflächen nur mit der ersten Auswerteschaltung und eine zweite Gruppe von Kontaktflächen nur mit der zweiten Auswerteschaltung verbunden sein. Dadurch ist die Trennung verschiedener Schaltzustände bzw. deren Zuordnung zu den unterschiedlichen Auswerteschaltungen ganz besonders einfach realisierbar.

Besonders vorteilhaft ist bei einer weiteren Variante der erfindungsgemäßen Schaltungsanordnung vorgesehen, dass das Kontaktmittel des Schalters zwischen verschiedenen Schaltzuständen hin- und herbewegbar ist, und dass zwischen der ersten Gruppe von Kontaktflächen und der zweiten Gruppe von Kontaktflächen mindestens eine, vorzugsweise einem neutralen Schaltzustand entsprechende, Kontaktfläche vorgesehen ist, die mit einem Bezugspotential, insbesondere einem Massepotential, verbunden ist. Unabhängig davon, ob das Kontaktmittel zwischen seinen Schaltzuständen linear oder auf einer Kreisbahn oder dergleichen hin- und herbewegt wird, ist dadurch sichergestellt, dass zwischen beiden Gruppen von Kontaktflächen beziehungsweise bei dem Übergang von Schaltzuständen, die der ersten Gruppe von Kontaktflächen zugeordnet sind zu den Schaltzuständen, die der zweiten Kontaktfläche zugeordnet sind, stets ein Schaltzustand, vorzugsweise der neutrale Schaltzustand, angenommen wird, der im Falle eines Fahrtrichtungsanzeigers beispielsweise weder einer Signalisierung "rechts" beziehungsweise "links" entspricht, sondern vielmehr der Ruhestellung des Fahrtrichtungsanzeigers.

Das heißt, bei diesem neutralen Schaltzustand kann beispielsweise vorgesehen sein, dass kein Knotenpunkt der ersten und/oder zweiten Auswerteschaltung mit einem anderen Knotenpunkt oder einem anderen Bezugspotential verbunden wird.

Um das Erreichen des neutralen Schaltzustands durch eine der Auswerteschaltungen erkennen zu können, kann vorteilhaft jedoch auch vorgesehen sein, dass die dem neutralen Schaltzustand zugeordnete Kontaktfläche ebenfalls mit einem Knotenpunkt der betreffenden Auswerteschaltung verbunden ist. Bei einer weiteren sehr vorteilhaften Ausführungsform der erfindungsgemäßen Schaltungsanordnung ist vorgesehen, dass die erste und/oder zweite Auswerteschaltung mindestens einen Spannungsteiler aufweist, wobei der Spannungsteiler vorzugsweise mindestens zwei zueinander in Serie geschaltete Widerstände, insbesondere ohmsche Widerstände, aufweist.

Sehr vorteilhaft sind die Spannungsteiler jeweils über einen pullup-Widerstand mit einem Bezugspotential verbunden. Das jeweils andere Ende des Spannungsteilers kann dementsprechend beispielsweise mit einem Massepotential oder einem sonstigen weiteren Bezugspotential verbunden sein.

Eine weitere vorteilhafte Ausführungsform der erfindungsgemäßen Schaltungsanordnung sieht vor, dass ein Ausgangsanschluss der Auswerteschaltung mit einem Knotenpunkt des Spannungsteilers verbunden ist, der nicht fest beziehungsweise permanent mit einem Bezugspotential verbunden ist. Dieser Knotenpunkt ändert entsprechend der Spannungsteilerregel sein Potential je nach der Verschaltung beziehungsweise Verbindung der weiteren Widerstände beziehungsweise der zwischen ihnen angeordneten Knotenpunkte des Spannungsteilers und damit in Abhängigkeit derjenigen Schaltungskonfiguration, die sich durch das Zusammenwirken des Kontaktmittels des Schalters mit den Kontaktflächen und damit den Knotenpunkten des Spannungsteilers ergibt.

Ein besonders einfacher Aufbau der erfindungsgemäßen Schaltungsanordnung wird erhalten, indem die Spannungsteiler der ersten und der zweiten Auswerteschaltung dieselbe Schaltungsanordnung, insbesondere auch dieselben Widerstände beziehungsweise Widerstandswerte aufweisen. Dadurch ist es beispielsweise möglich, den beziehungsweise die Spannungsteiler als separate Komponente zu fertigen und einer erfindungsgemäßen Schaltungsanordnung jeweils eine oder zwei dieser Komponenten zuzuordnen, wodurch die Vielzahl unterschiedlicher Schaltungskomponenten reduziert und damit die Fertigungskosten gesenkt werden.

Bevorzugt können die Spannungsteiler auch ein vorzugsweise integriertes Widerstandsnetzwerk aufweisen beziehungsweise aus einem derartigen Widerstandsnetzwerk gebildet sein.

Sehr vorteilhaft ist der Schaltungsanordnung bei einer weiteren Variante der vorliegenden Erfindung eine Recheneinheit zugeordnet, die zur Auswertung des Schaltzustands des Schalters in Abhängigkeit von mindestens einem Ausgangssignal einer der Auswerteschaltungen vorgesehen ist.

Hierzu kann vorteilhaft jeweils ein Analogeingang der Recheneinheit mit einem Ausgangsanschluss einer der Auswerteschaltungen verbunden sein. Bei der Recheneinheit kann es sich beispielsweise um einen Mikrocontroller handeln.

Um eine weiter gesteigerte Sicherheit bei der Auswertung von Schaltzuständen des Schalters zu erzielen, kann vorgesehen sein, dass mindestens ein zusätzlicher Analogeingang und/oder ein Digitaleingang der Recheneinheit mit mindestens einem Knotenpunkt der Auswerteschaltung und/oder mit mindestens einer Kontaktfläche und/oder mit dem Kontaktmittel verbunden ist, wodurch sich beispielsweise eine noch flexiblere Auswertung beziehungsweise Plausibilisierung von Schaltzuständen realisieren lässt.

Zur Auswertung und/oder Plausibilisierung des Schaltzustands des Schalters sind einer weiteren Erfindungsvariante zufolge die Ausgangssignale beider Auswerteschaltungen auswertbar.

Als eine weitere Lösung der Aufgabe der vorliegenden Erfindung ist ein Schalter mit einem bewegbaren Kontaktmittel und mit einer erfindungsgemäßen Schaltungsanordnung angegeben.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

In der Zeichnung zeigt:

Figur 1     eine erste Ausführungsform einer erfindungsgemäßen Schaltungsanordnung, und
Figur 2     eine zweite Ausführungsform der erfindungsgemäßen Schaltungsanordnung.

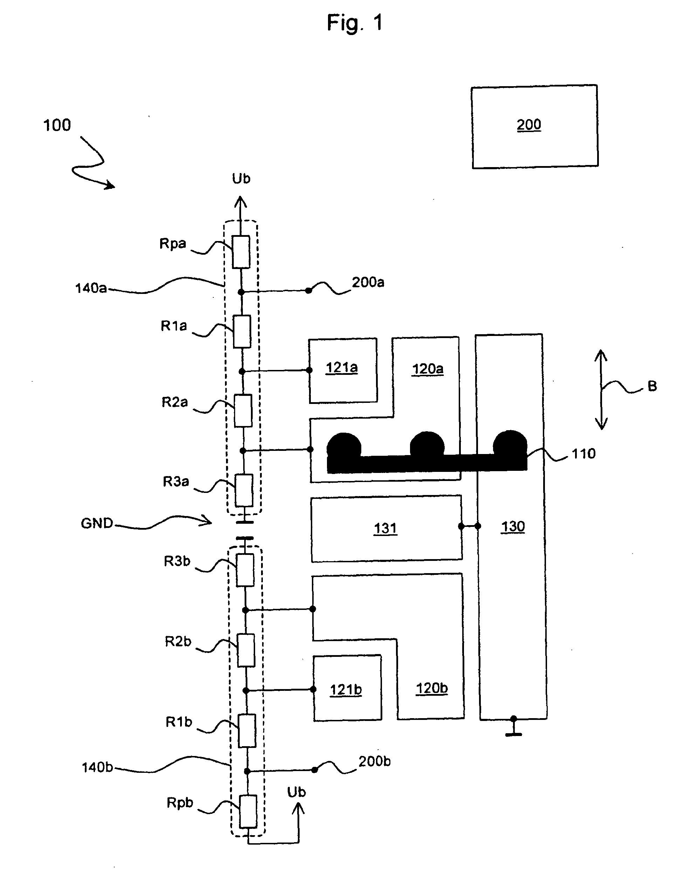

Figur 1 zeigt schematisch eine erfindungsgemäße Schaltungsanordnung 100, die zur Auswertung verschiedener Schaltzustände eines nicht abgebildeten Schalters dient. Die erfindungsgemäße Schaltungsanordnung 100 weist eine erste, durch einen Spannungsteiler 140a gebildete Auswerteschaltung auf.

Der Spannungsteiler 140a besteht - wie aus Figur 1 ersichtlich - aus einer Serienschaltung der Widerstände Rpa, R1a, R2a, R3a. Diese Serienschaltung liegt zwischen einem Bezugspotential Ub, das beispielsweise einer Betriebsspannung der Schaltungsanordnung 100 beziehungsweise einer der Schaltungsanordnung 100 zugeordneten Recheneinheit 200 entspricht, und dem Massepotential GND.

Bei dem ersten Widerstand Rpa des Spannungsteilers 140a handelt es sich um einen pullup-Widerstand, über den die Serienschaltung der restlichen Widerstände R1a, R2a, R3a des Spannungsteilers 140a mit dem der Betriebsspannung Ub entsprechenden Bezugspotential permanent verbunden sind. Ein zwischen dem pullup-Widerstand Rpa und dem Widerstand R1a liegender Knotenpunkt des Spannungsteilers 140a ist mit einem Analogeingang 200a der Recheneinheit 200 verbunden. Die an dem Analogeingang 200a der Recheneinheit 200 anliegende Spannung ist somit gemäß der Spannungsteilerregel abhängig von einem Widerstandsverhältnis zwischen dem pullup-Widerstand Rpa und der Serienschaltung der Widerstände Rpa, R1a, R2a, R3a.

Die erfindungsgemäße Schaltungsanordnung 100 verfügt wie aus Figur 1 ersichtlich über den Widerständen R1a, R2a, R3a des Spannungsteilers 140a zugeordnete Kontaktflächen 120a, 121a, 130, 131, die durch ein bewegbares Kontaktmittel 110 des Schalters in Abhängigkeit der jeweiligen Schalterstellung beziehungsweise des Schaltzustands untereinander verbindbar sind.

Das bewegbare Kontaktmittel 110 ist bei einer entsprechenden Betätigung des nicht dargestellten Schalters wie in Figur 1 durch den Doppelpfeil B symbolisiert in vertikaler Richtung hin- und herbewegbar, wodurch sich die unterschiedlichen Schaltzustände ergeben.

Ein erster, nachfolgend auch als neutraler Schaltzustand bezeichneter Schaltzustand ist dadurch realisiert, dass das Kontaktmittel 110 ausschließlich auf den gemäß Figur 1 permanent mit dem Massepotential GND verbundenen Kontaktflächen 130, 131 ruht. In diesem Fall verbindet das Kontaktmittel 110 die ohnehin bereits untereinander verbundenen Kontaktflächen 130, 131; eine Auswirkung des Kontaktmittels 110 auf den Spannungsteiler 140a der ersten Auswerteschaltung ergibt sich hierbei nicht. In diesem Fall ergibt sich für die an dem Analogeingang 200a der Recheneinheit 200 anliegende Teilspannung Ua gemäß der Spannungsteilerregel

$$Ua = Ub \times \frac{R1a + R2a + R3a}{Rpa + R1a + R2a + R3a} \ .$$

Bei einem weiteren, von dem neutralen Schaltzustand verschiedenen Schaltzustand des Schalters, bei dem das Kontaktmittel 110 die in Figur 1 abgebildete Position aufweist, in der es die Kontaktfläche 120a mit der auf dem Massepotential GND liegenden Kontaktfläche 130 verbindet, ist dementsprechend auch der zwischen den Widerständen R2a, R3a des Spannungsteilers 140a liegende Schaltungsknoten über die Kontaktfläche 120a, das Kontaktmittel 110 und die Kontaktfläche 130 mit dem Massepotential GND verbunden. In diesem Fall ergibt sich für die an dem ersten Analogeingang 200a der Recheneinheit 200 anliegende Teilspannung

$$Ua = Ub \times \frac{R1a + R2a}{Rpa + R1a + R2a} \text{ ,}$$

d.h., in diesem Fall ist die Teilspannung Ua geringer als in dem neutralen Schaltzustand.

Bei einem dritten Schaltzustand verbindet das Kontaktmittel 110 die Kontaktflächen 121a, 120a und 130 miteinander und damit den zwischen den Widerständen R1a, R2a des Spannungsteilers 140a liegenden Knotenpunkt mit dem Massepotential GND. In diesem Fall besteht der die an dem Analogeingang 200a bestimmende Spannungsteiler nur noch aus dem pullup-Widerstand Rpa und dem Widerstand R1a, woraus sich für die Teilspannung Ua entsprechend ergibt:

$$Ua = Ub \times \frac{R1a}{Rpa + R1a} \text{ .}$$

Aus den vorstehenden Erläuterungen ergibt sich, dass die in Figur 1 abgebildete Konfiguration der Kontaktflächen 120a, 121a, 130, 131 sowie der diesen Kontaktflächen zugeordnete erste Spannungsteiler 140a insgesamt die Erfassung dreier Schaltzustände ermöglichen, wobei die Auswertung der von dem jeweiligen Schaltzustand abhängigen Teilspannung Ua über den ersten Analogeingang 200a der Recheneinheit 200 erfolgt. Eine derartige Erfassung mit einem einzigen analogen Eingang 200a ist auch bei herkömmlichen Systemen bekannt.

Nachteilig hieran ist insbesondere die Möglichkeit, dass beispielsweise aufgrund einer Verschlechterung des elektrischen Kontakts zwischen dem Kontaktmittel 110 und beispielsweise der Kontaktfläche 120a der zwischen den Widerständen R2a, R3a liegende Knotenpunkt des Spannungsteilers 140a nicht optimal, das heißt möglichst niederohmig, mit dem Massepotential GND verbunden werden könnte. In einem solchen Fall würde sich dementsprechend nicht die vorstehend beschriebene Teilspannung

$$\dot{U}a = Ub \times \frac{R1a + R2a}{Rpa + R1a + R2a}$$

einstellen, sondern vielmehr eine hiervon verschiedene Teilspannung

$$Ua' = Ub \times \frac{R1a + R2a + Rx}{Rpa + R1a + R2a + Rx} \text{ ,}$$

wobei Rx dem unerwünscht hohen Kontaktwiderstand zwischen dem Kontaktmittel 110 und der Kontaktfläche 120a entspricht.

Hierdurch kann es nachteilig zu Fehlentscheidungen hinsichtlich des Schaltzustands beziehungsweise der Schalterstellung des Schalters kommen, weil die Teilspannung Ua' in einem Spannungsbereich liegen kann, der üblicherweise z.B. einem anderen Schaltzustand zugeordnet ist.

Zur Vermeidung derartiger Nachteile weist die erfindungsgemäße Schaltungsanordnung 100 wie aus Figur 1 ersichtlich vorteilhaft nicht nur einen einzigen Spannungsteiler 140a, sondern eine weitere Auswerteschaltung mit einem weiteren Spannungsteiler 140b auf.

Der zweite Spannungsteiler 140b ist ähnlich ausgebildet wie der erste Spannungsteiler 140a und ebenfalls mit dem Bezugspotential Ub der Schaltungsanordnung 100 sowie mit dem Massepotential GND verbunden. Er weist die Widerstände Rpb, R1b, R2b, R3b auf. Bei einer besonders bevorzugten Ausführungsform der erfindungsgemäßen Schaltungsanordnung 100 können die Spannungsteiler 140a, 140b sogar dieselben ohmschen Widerstände beziehungsweise Widerstandswerte aufweisen, wodurch sich die Fertigung der Schaltungsanordnung 100 aufgrund der Verringerung der Anzahl verschiedener Komponenten vereinfacht. Bevorzugt werden die Spannungsteiler 140a, 140b in Form eines oder mehrerer, vorzugsweise integrierter, Widerstandsnetzwerke realisiert.

Wie aus Figur 1 ersichtlich ist, sind dem zweiten Spannungsteiler 140b weitere Kontaktflächen 120b, 121b, 130, 131 zugeordnet, nicht jedoch die Kontaktflächen 120a, 121a.

Durch die erfindungsgemäße exklusive Zuordnung verschiedener Gruppen 120a, 121a; 120b, 121b von Kontaktflächen zu den unterschiedlichen Spannungsteilern 140a, 140b ist vorteilhaft gewährleistet, dass auch ein suboptimaler elektrischer Kontakt oder sonstige zwischen dem Kontaktmittel 110 und den betreffenden Kontaktflächen wirkende Störeinflüsse nicht zu einer Verwechslung von Schaltzuständen des Schalters derart führen können, dass anstelle eines ausschließlich dem ersten Spannungsteiler 140a zugeordneten Schaltzustands fälschlicherweise ein Schaltzustand erkannt wird, der ausschließlich dem zweiten Spannungsteiler 140b zugeordnet ist.

Beispielsweise kann die in Figur 1 abgebildete erfindungsgemäße Schaltungsanordnung 100 zur Auswertung von Schaltzuständen eines Schalters eines Fahrtrichtungsanzeigers eines Kraftfahrzeugs dienen. Hierbei ist den Kontaktflächen 120a, 121a und dem ersten Spannungsteiler 140a eine erste Richtung, beispielsweise "rechts", zugeordnet. Die zweite Richtung, "links", ist dementsprechend ausschließlich den Kontaktflächen 120b, 121b und dem zweiten Spannungsteiler 140b zugeordnet.

Der bereits beschriebene neutrale Schaltzustand, in dem das Kontaktmittel 110 auf den Kontaktflächen 130 und 131 ruht, entspricht hierbei einem neutralen Schaltzustand des Fahrtrichtungsanzeigers.

Durch diese erfindungsgemäße Konfiguration ergibt sich vorteilhaft, dass die Fahrtrichtungsanzeige "rechts" betreffende Schaltzustände exklusiv durch den ersten Spannungsteiler 140a und den ersten Analogeingang 200a der Recheneinheit 200 ausgewertet werden, während der Fahrtrichtungsanzeige "links" entsprechende Schaltzustände ausschließlich durch den zweiten Spannungsteiler 140b und den ebenfalls erfindungsgemäß vorgesehen zweiten Analogeingang 200b der Recheneinheit 200 ausgewertet werden.

Aus den vorstehenden Beschreibungen ist offensichtlich, dass selbst eine Kontaktverschlechterung oder ein sonstiger Fehler, der zu einer an sich unerwünschten Verschiebung des Spannungsteilerverhältnisses des Spannungsteilers 140a und damit zu einer entsprechenden Verfälschung der über den Analogeingang 200a erfassten Teilspannung Ua führt, allenfalls zu einer Fehlentscheidung hinsichtlich einzelner, dieselbe Richtung betreffender Schaltzustände führt, wie sie durch die unterschiedlichen Kontaktflächen 120a, 121a realisierbar sind.

Beispielsweise ist dem in Figur 1 gezeigten Schaltzustand des Kontaktmittels 110 eine sog. Spurwechsel-Funktion zugeordnet, die ein dreimaliges Betätigen einer Richtungswechselanzeige des Kraftfahrzeugs zur Folge hat, während der die Kontaktflächen 120a, 121a, 130 verbindende Schaltzustand des Kontaktmittels 110 ein permanentes Blinken der entsprechenden Fahrtrichtungsanzeige bewirkt. In einem Fehlerfall werden dementsprechend allenfalls die Spurwechsel-Funktion beziehungsweise das herkömmliche Blinken in derselben Fahrtrichtung miteinander verwechselt, ein unbeabsichtigtes betätigen einer der anderen Richtung entsprechenden Fahrtrichtungsanzeige ist jedoch ausgeschlossen, weil die andere Richtung betreffende Schaltzustände dem zweiten Spannungsteiler 140b zugeordnet sind.

Dieselben Ausführungen gelten für den zweiten Spannungsteiler 140b entsprechend. Das heißt, gegebenenfalls auftretende Kontaktverschlechterungen zwischen dem Kontaktmittel 110 und den Kontaktflächen 120b, 121b, 130 können unter Umständen unterschiedliche, derselben Fahrtrichtung zugewiesene Funktionen beeinträchtigen, nicht jedoch zu einer Betätigung einer Fahrtrichtungsanzeige der anderen Fahrtrichtung führen.

Dadurch ergibt sich durch die erfindungsgemäße Schaltungsanordnung 100 eine bedeutend gesteigerte Betriebssicherheit eines mit der Schaltungsanordnung 100 ausgestatteten Fahrtrichtungsanzeigers.

Andere Schalter beziehungsweise ganz allgemein Betätigungselemente, deren Kontaktmittel sich linear oder auch auf einer Kreis- oder sonstigen Bahn hin- und herbewegen, um in Zusammenwirkung mit entsprechenden Kontaktflächen einen jeweiligen Schaltzustand herzustellen, können ebenfalls mit einer erfindungsgemäßen Schaltungsanordnung ausgestattet sein.

Die Anzahl der über einen einzelnen Spannungsteiler 140a, 140b detektierbaren unterschiedlichen Schaltzustände kann durch entsprechendes Einfügen weiterer Widerstände gesteigert werden, wobei sich die den Schaltzuständen zugewiesenen Spannungsintervalle der Teilspannung Ua entsprechend verringern.

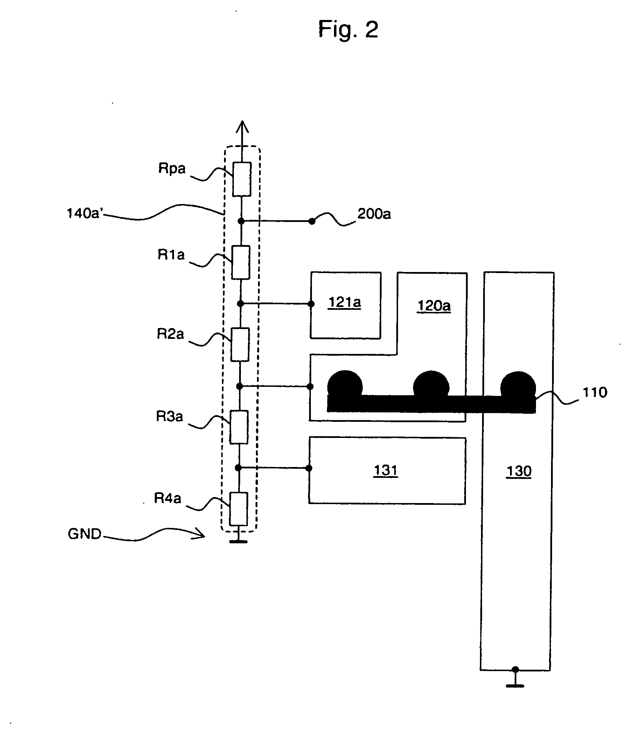

Bei der in Figur 1 abgebildeten Konfiguration ist keine Möglichkeit zur aktiven Erkennung des neutralen Schaltzustands des Kontaktsmittels 110 über die Spannungsteiler 140a, 140b gegeben. Im Unterschied hierzu weist der modifizierte erste Spannungsteiler 140a' der in Figur 2 nur teilweise wiedergegebenen erfindungsgemäßen Schaltungsanordnung 100 einen weiteren Widerstand R4a auf, der eine derartige aktive Erkennung des neutralen Schaltzustands ermöglicht. Wie aus Figur 2 ersichtlich ist, ist ein Anschluss des Widerstands R4a mit dem Massepotential GND verbunden, und der andere Anschluss des Widerstands R4a ist mit der Kontaktfläche 131 und dem Widerstand R3a verbunden.

Die Kontaktfläche 131 ist - im Unterschied zu der in Figur 1 abgebildeten Konfiguration - nicht mehr mit der nach wie vor mit dem Massepotential GND verbundenen Kontaktfläche 130 verbunden. Dadurch wird bei der Konfiguration gemäß Figur 2 bei dem Einnehmen des neutralen Schaltzustands durch das Kontaktmittel 110 die Kontaktfläche 131 über das Kontaktmittel 110 und die Kontaktfläche 130 mit dem Massepotential GND verbunden und somit auch der mit der Kontaktfläche 131 verbundene Schaltungsknoten zwischen den Widerständen R3a, R4a des modifizierten ersten Spannungsteilers 140a'.

Hierbei ergibt sich für die an dem Analogeingang 200a anliegende Teilspannung

$$Ua = Ub \times \frac{R1a + R2a + R3a}{Rpa + R1a + R2a + R3a} \ .$$

Im Unterschied hierzu ergibt sich bei einem fehlerhaften Schaltzustand, bei dem das Kontaktmittel 110 in dem neutralen Schaltzustand beispielsweise keine hinreichend niederohmige elektrische Verbindung zwischen der Kontaktfläche 130 und der Kontaktfläche 131 herstellt, ein anderer Wert für die über den ersten Analogeingang 200a ausgewertete Teilspannung

$$Ua = Ub \times \frac{R1a + R2a + R3a + R4a}{Rpa + R1a + R2a + R3a + R4a} \ .$$

Das heißt, durch den modifizierten Spannungsteiler 140a' ist aktiv auch das korrekte Einnehmen des neutralen Schaltzustands durch das Kontaktmittel 110 detektierbar.

Das erfindungsgemäße Prinzip der mehreren Spannungsteiler 140a, 140b ist nicht auf die vorstehend unter Bezugnahme auf die Figuren 1, 2 beschriebenen Konfigurationen beschränkt. Vielmehr können auch weitere, nicht gezeigte, Spannungsteiler vorgesehen sein, die jeweils wiederum zumindest einigen Kontaktflächen der Schaltungsanordnung 100 exklusiv zugeordnet sind und dadurch die alleinige Auswertung der betreffenden Schaltzustände ermöglichen. Pro Gruppe von Kontaktflächen 120a, 121a, die getrennt ausgewertet werden soll, ist dementsprechend ein weiterer Analogeingang der Recheneinheit 200 sowie ein zugeordneter Spannungsteiler vorzusehen.

Eine weitere Steigerung der Zuverlässigkeit bei der Auswertung von Schaltzuständen kann erfindungsgemäß dadurch erzielt werden, dass weitere Analogeingänge (nicht gezeigt) beziehungsweise Digitaleingänge der Recheneinheit 200 mit mindestens einem Knotenpunkt der Auswerteschaltung beziehungsweise der Spannungsteiler 140a, 140b und/oder mit mindestens einer Kontaktfläche 120a, 120b, 121a, 121b, 130, 131 und/oder mit dem Kontaktmittel 110 selbst verbunden sind.

Bereits bei der erfindungsgemäßen Konfiguration nach Figur 1 kann vorteilhaft eine Plausibilisierung von Schaltzuständen erfolgen. Hierzu können beispielsweise jeweils beide Ausgangssignale der Spannungsteiler 140a, 140b über die entsprechenden Analogeingänge 200a, 200b der Recheneinheit 200 ausgewertet werden. Falls diese Auswertung beispielsweise ergibt, dass gleichzeitig sowohl die Kontaktfläche 120a und der ihr zugeordnete Knotenpunkt zwischen den Widerständen R2a, R3a des ersten Spannungsteilers 140a und die Kontaktfläche 120b sowie der ihr zugeordnete Knotenpunkt zwischen den Widerständen R2b und R3b des zweiten Spannungsteilers 140b mit dem Massepotential GND verbunden ist, kann auf einen Fehler geschlossen werden, da eine entsprechende gleichzeitige Kontaktierung der Kontaktflächen 120a, 120b durch ein einziges, ordnungsgemäß positioniertes Kontaktmittel 110 ausgeschlossen ist.

Unter Anwendung des erfindungsgemäßen Prinzips können bei geeigneter Ausgestaltung der Kontaktflächen der Schaltungsanordnung 100 eine Vielzahl verschiedener elektrisch kontaktierender Betätigungselemente wie beispielsweise gleitende oder tastende Kontakte, zum Beispiel Kontaktschieber, Kontaktschleifer und dergleichen ausgewertet werden, wobei jeweils die erfindungsgemäß gesteigerte Sicherheit hinsichtlich der Vermeidung von Fehlauswertungen gegeben ist. Durch eine Variation der Anzahl von Spannungsteilern beziehungsweise Analogeingängen können die Anzahl beziehungsweise die Möglichkeiten zur Plausibilisierung von Schaltzuständen gesteigert werden.

Vorteilhaft können als Auswerteschaltung auch andere Schaltungstypen als die vorstehend beschriebenen Spannungsteiler 140a, 140b verwendet werden, solange sie eine analog erfassbare Ausgangsgröße ausgeben, die sich jeweils in Abhängigkeit eines Schaltzustands bzw. einer Position des Kontaktmittels 110 ändert.

Beispielsweise kann vorteilhaft auch eine Auswerteschaltung verwendet werden, die eine Serienschaltung aus einem pullup-Widerstand und einer Parallelschaltung mehrerer weiterer Widerstände aufweist. Hierbei kann der pullup-Widerstand wiederum mit einem Bezugspotential verbunden sein, und jedem weiteren Widerstand kann an seinem nicht mit dem pullup-Widerstand verbundenen Anschluss eine Kontaktfläche zugeordnet sein, die über ein entsprechendes Kontaktmittel mit einem weiteren Bezugspotential verbindbar ist. Bei entsprechender Auslegung der Kontaktflächen bzw. des Kontaktmittels können dann vorteilhaft jeweils einer oder auch mehrere der weiteren Widerstände gleichzeitig über ihre jeweilige Kontaktfläche und das Kontaktmittel mit einem Bezugspotential wie z.B. dem Massepotential verbunden werden.

Anstelle eines der Betriebsspannung Ub oder dem Massepotential GND entsprechenden Bezugspotentials kann generell auch jedes andere zur Verfügung stehende Potential zum Anschluss an die Auswerteschaltung verwendet werden. Auch eine Vertauschung des der Betriebsspannung Ub entsprechenden Potentials mit dem Massepotential GND bei dem Anschluss der Auswerteschaltung, vgl. z.B. Figur 1, ist denkbar.

Eine Schaltungsvariante mit besonders geringem Energiebedarf sieht eine periodische Auswertung von Schaltzuständen vor, bei der die an den Analogeingängen 200a, 200b der Recheneinheit 200 anliegende Spannung in vorgebbaren Zeitabständen von z.B. 20 ms erfasst wird. In diesem Fall kann die Betriebsspannung Ub vorteilhaft jeweils auch nur für den Messzeitraum an die Auswerteschaltungen angelegt werden, um die ohmschen Verluste in den Auswerteschaltungen zu minimieren.

Neben der Verwendung von ohmschen Widerständen in den Auswerteschaltungen können auch induktive oder kapazitive Bauelemente zur Ausbildung der Auswerteschaltungen vorgesehen sein, wobei die Spannungsversorgung dementsprechend mit einer Wechselspannung erfolgt. Zur Auswertung kann ergänzend eine dem Ausgangsanschluss zugeordnete Filter- und/oder Gleichrichterschaltung vorgesehen sein. Eine direkte analoge Erfassung des Wechselspannungssignals ist bei einer hinreichend hohen Abtastrate ebenso denkbar.

## Patentansprüche

1. Schaltungsanordnung (100) zur Auswertung von mindestens zwei Schaltzuständen eines Schalters, wobei eine erste Auswerteschaltung (140a) vorgesehen ist, und wobei über ein bewegbares Kontaktmittel (110) des Schalters verschiedene Knotenpunkte der ersten Auswerteschaltung (140a) in Abhängigkeit des jeweiligen Schaltzustands miteinander und/oder mit einem vorgebbaren Bezugspotential (GND) verbindbar sind, **dadurch gekennzeichnet, dass** zusätzlich zu der ersten Auswerteschaltung (140a) auch eine zweite Auswerteschaltung (140b) vorgesehen ist, und dass bei mindestens einem Schaltzustand des Schalters Knotenpunkte der zweiten Auswerteschaltung (140b) in Abhängigkeit des Schaltzustands miteinander und/oder mit einem vorgebbaren Bezugspotential (GND) verbindbar sind.

2. Schaltungsanordnung (100) nach Anspruch 1, **dadurch gekennzeichnet, dass** ein oder mehrere Knotenpunkte der ersten und/oder zweiten Auswerteschaltung (140a, 140b) mit Kontaktflächen (120a, 120b, 121a, 121b, 131) verbunden sind, die zur Kontaktierung mit dem Kontaktmittel (110) des Schalters dienen.

3. Schaltungsanordnung (100) nach Anspruch 2, **dadurch gekennzeichnet, dass** eine erste Gruppe von Kontaktflächen (120a, 121a) nur mit der ersten Auswerteschaltung (140a) und eine zweite Gruppe von Kontaktflächen (120b, 121b) nur mit der zweiten Auswerteschaltung (140b) verbunden ist.

4. Schaltungsanordnung (100) nach Anspruch 3, **dadurch gekennzeichnet, dass** das Kontaktmittel (110) zwischen verschiedenen Schaltzuständen hin- und herbewegbar ist, und dass zwischen der ersten Gruppe von Kontaktflächen (120a, 121a) und der zweiten Gruppe von Kontaktflächen (120b, 121b) mindestens eine, vorzugsweise einem neutralen Schaltzustand entsprechende, Kontaktfläche (131) vorgesehen ist, die mit einem Bezugspotential (GND), insbesondere einem Massepotential, verbunden ist.

5. Schaltungsanordnung (100) nach Anspruch 4, **dadurch gekennzeichnet, dass** die dem neutralen Schaltzustand zugeordnete Kontaktfläche (131) mit einem Knotenpunkt der ersten und/oder zweiten Auswerteschaltung (140a, 140b) verbunden ist.

6. Schaltungsanordnung (100) nach einem der vorstehenden Ansprüche, **dadurch gekennzeichnet, dass** die erste und/oder zweite Auswerteschaltung (140a, 140b) mindestens einen Spannungsteiler aufweist, wobei der Spannungsteiler vorzugsweise mindestens zwei zueinander in Serie geschaltete Widerstände (R1a, R2a, R3a, R1b, R2b, R3b), insbesondere ohmsche Widerstände, aufweist.

7. Schaltungsanordnung (100) nach Anspruch 6, **dadurch gekennzeichnet, dass** der Spannungsteiler über einen pullup-Widerstand (Rpa, Rpb) mit einem Bezugspotential (Ub) verbunden ist.

8. Schaltungsanordnung (100) nach Anspruch 6 oder 7, **dadurch gekennzeichnet, dass** ein Ausgangsanschluss der Auswerteschaltung (140a, 140b) mit einem Knotenpunkt des Spannungsteilers verbunden ist, der nicht fest beziehungsweise permanent mit einem Bezugspotential (Ub, GND) verbunden ist.

9. Schaltungsanordnung (100) nach einem der Ansprüche 6 bis 8, **dadurch gekennzeichnet, dass** die Spannungsteiler der ersten und der zweiten Auswerteschaltung (140a, 140b) dieselbe Schaltungsanordnung, insbesondere auch dieselben Widerstände (R1a, R2a, R3a, R1b, R2b, R3b) beziehungsweise Widerstandswerte, aufweisen.

10. Schaltungsanordnung (100) nach einem der Ansprüche 6 bis 9, **dadurch gekennzeichnet, dass** die Spannungsteiler ein, vorzugsweise integriertes, Widerstandsnetzwerk aufweisen.

11. Schaltungsanordnung (100) nach einem der vorstehenden Ansprüche, **gekennzeichnet durch** eine Recheneinheit (200) zur Auswertung des Schaltzustands des Schalters in Abhängigkeit von mindestens einem Ausgangssignal einer der Auswerteschaltungen (140a, 140b).

12. Schaltungsanordnung (100) nach Anspruch 11, **dadurch gekennzeichnet, dass** jeweils ein Analogeingang (200a, 200b) der Recheneinheit (200) mit einem Ausgangsanschluss einer der Auswerteschaltungen (140a, 140b) verbunden ist.

13. Schaltungsanordnung (100) nach einem der Ansprüche 11 bis 12, **dadurch gekennzeichnet, dass** mindestens ein zusätzlicher Analogeingang und/oder ein Digitaleingang der Recheneinheit (200) mit mindestens einem Knotenpunkt der Auswerteschaltung (140a, 140b) und/oder mit mindestens einer Kontaktfläche (120a, 120b, 121a, 121b, 130, 131) und/oder mit dem Kontaktmittel (110) verbunden ist.

14. Schaltungsanordnung (100) nach einem der Ansprüche 11 bis 13, **dadurch gekennzeichnet, dass** zur Auswertung und/oder Plausibilisierung des Schaltzustands des Schalters die Ausgangssignale beider Auswerteschaltungen (140a, 140b) auswertbar sind.

15. Schalter mit einem bewegbaren Kontaktmittel (110), **gekennzeichnet durch** eine Schaltungsanordnung (100) nach einem der vorstehenden Ansprüche.

**Claims**

1. Circuit arrangement (100) for evaluating at least two switching states for a switch, wherein a first evaluation circuit (140a) is provided, and wherein a movable contact means (110) on the switch can be used to connect various nodes in the first evaluation circuit (140a) to one another and/or to a prescribable reference-earth potential (GND) on the basis of the respective switching state, **characterized in that** in addition to the first evaluation circuit (140a) a second evaluation circuit (140b) is also provided, and **in that** in at least one switching state of the switch it is possible for nodes in the second evaluation circuit (140b) to be connected to one another and/or to a prescribable reference-earth potential (GND) on the basis of the switching state.

2. Circuit arrangement (100) according to Claim 1, **characterized in that** one or more nodes in the first and/or second evaluation circuit (140a, 140b) are connected to contact areas (120a, 120b, 121a 121b, 131) which are used for making contact with the contact means (110) on the switch.

3. Circuit arrangement (100) according to Claim 2, **characterized in that** a first group of contact areas (120a, 121a) is connected only to the first evaluation circuit (140a) and a second group of contact areas (120b, 121b) is connected only to the second evaluation circuit (140b).

4. Circuit arrangement (100) according to Claim 3, **characterized in that** the contact means (110) can move to and fro between various switching states and **in that** the first group of contact areas (120a, 121a) and the second group of contact areas (120b, 121b) have at least one contact area (131), preferably corresponding to a neutral switching state, provided between them which is connected to a reference-earth potential (GND), particularly to an earth potential.

5. Circuit arrangement (100) according to Claim 4, **characterized in that** the contact area (131) associated with the neutral switching state is connected to a node in the first and/or second evaluation circuit (140a, 140b).

6. Circuit arrangement (100) according to one of the preceding claims, **characterized in that** the first and/or second evaluation circuit (140a, 140b) has at least one voltage divider, wherein the voltage divider preferably has at least two series-connected resistors (R1a, R2a, R3a, R1b, R2b, R3b), particularly nonreactive resistors.

**7.** Circuit arrangement to (100) according to Claim 6, **characterized in that** the voltage divider is connected to a reference-earth potential (Ub) via a pull-up resistor (Rpa, Rpb).

**8.** Circuit arrangement (100) according to Claim 6 or 7, **characterized in that** an output connection of the evaluation circuit (140a, 140b) is connected to a node in the voltage divider which is not solidly or permanently connected to a reference-earth potential (Ub, GND).

**9.** Circuit arrangement (100) according to one of Claims 6 to 8, **characterized in that** the voltage dividers in the first and second evaluation circuits (143a, 140b) have the same circuit arrangement, particularly also the same resistors (R1a, R2a, R3a, R1b, R2b, R3b) or resistor values.

**10.** Circuit arrangement (100) according to one of Claims 6 to 9, **characterized in that** the voltage dividers have up preferably integrated, resistor network.

**11.** Circuit arrangement (100) according to one of the preceding claims, **characterized by** a computation unit (200) for evaluating the switching state of the switch on the basis of at least one output signal from one of the evaluation circuits (140a, 140b).

**12.** Circuit arrangement (100) according to Claim 11, **characterized in that** a respective analogue input (200a, 200b) of the computation unit (200) is connected to an output connection of one of the evaluation circuits (140a, 140b).

**13.** Circuit arrangement (100) according to one of Claims 11 and 12, **characterized in that** at least one additional analogue input and/or a digital input of the computation unit (200) is connected to at least one node in the evaluation circuit (140a, 140b) and/or to at least one contact area (120a, 120b, 121a, 121b, 130, 131) and/or to the contact means (110).

**14.** Circuit arrangement (100) according to one of Claims 11 to 13, **characterized in that** the switching state of the switch can be evaluated and/or plausibility-checked by evaluating the output signals from both evaluation circuits (140a, 140b).

**15.** Switch having a movable contact means (110), **characterized by** a circuit arrangement (100) according to one of the preceding claims.

**Revendications**

**1.** Arrangement de circuit (100) pour interpréter au moins deux états de commutation d'un commutateur, un premier circuit d'interprétation (140a) étant prévu et différents points nodaux du premier circuit d'interprétation (140a) pouvant être reliés entre eux et/ou a avec un potentiel de référence (GND) prédéfinissable par le biais d'un moyen de contact mobile (110) du commutateur en fonction de l'état de commutation respectif, **caractérisé en ce qu'**un deuxième circuit d'interprétation (140b) est également prévu en plus du premier circuit d'interprétation (140a) et **en ce que** dans au moins un état de commutation du commutateur, des points nodaux du deuxième circuit d'interprétation (140b) peuvent être reliés entre eux et/ou avec un potentiel de référence (GND) prédéfinissable en fonction de l'état de commutation.

**2.** Arrangement de circuit (100) selon la revendication 1, **caractérisé en ce qu'**un ou plusieurs points nodaux du premier et/ou du deuxième circuit d'interprétation (140a, 140b) sont reliés avec des surfaces de contact (120a, 120b, 121a, 121b, 131) qui servent à établir le contact avec le moyen de contact (110) du commutateur.

**3.** Arrangement de circuit (100) selon la revendication 2, **caractérisé en ce qu'**un premier groupe de surfaces de contact (120a, 121a) est seulement relié arec le premier circuit d'interprétation (140a) et un deuxième groupe de surfaces de contact (120b, 121b) est seulement relié avec le deuxième circuit d'interprétation (140b).

**4.** Arrangement de circuit (100) selon la revendication 3, **caractérisé en ce que** le moyen de contact (110) peut être déplacé dans les deux sens entre différents états de commutation et **en ce qu'**entre le premier groupe de surfaces de contact (120a, 121a) et le deuxième groupe de surfaces de contact (120b, 121b) est prévue au moins une surface de contact (131), correspondant de préférence à un état de commutation neutre, laquelle est reliée avec un potentiel de référence (GND), notamment un potentiel de masse.

**5.** Arrangement de circuit (100) selon la revendication 4, **caractérisé en ce que** la surface de contact (131) associée à l'état de commutation neutre est reliée avec un point nodal du premier et/ou du deuxième circuit d'interprétation (140a, 140b).

**6.** Arrangement de circuit (100) selon l'une des revendications précédentes, **caractérisé en ce que** le premier et/ou le deuxième circuit d'interprétation (140a, 140b) présentent au moins un diviseur de tension, le diviseur de tension présentant de préférence au moins deux résistances (R1a, R2a, R3a, R1b, R2b, R3b) branchées en série l'une avec l'autre, notamment des résistances ohmiques.

**7.** Arrangement de circuit (100) selon la revendication 6, **caractérisé en ce que** le diviseur de tension, est relié avec un potentiel de référence (Ub) par le biais d'une résistance de tirage au positif (Rpa, Rpb).

**8.** Arrangement de circuit (100) selon la revendication 6 ou 7, **caractérisé en ce qu'**une borne de sortie du circuit d'interprétation (140a, 140b) est reliée avec un point nodal du diviseur de tension qui n'est pas relié à demeure ou en permanence avec un potentiel de référence (Ub, GND).

**9.** Arrangement de circuit (100) selon, l'une des revendications 6 à 8, **caractérisé en ce que** les diviseurs de tension du premier et du deuxième circuit d'interprétation (140a, 140b) présentent le même arrangement de circuit, notamment aussi les mêmes résistances (R1a, R2a, R3a, R1b, R2b, R3b) ou valeurs de résistance.

**10.** Arrangement de circuit (100) selon l'une des revendications 6 à 9, **caractérisé en ce que** les diviseurs de tension présentent un réseau résistif de préférence intégré.

**11.** Arrangement de circuit (100) selon l'une des revendications précédentes, **caractérisé par** une unité de calcul (200) pour interpréter l'état de commutation du commutateur en fonction d'au moins un signal de sortie de l'un des circuits d'interprétation (140a, 140b).

**12.** Arrangement de circuit (100) selon la revendication 11, **caractérisé en ce qu'**une sortie analogique (200a, 200b) de l'unité de calcul (200) est respectivement reliée avec une borne de sortie de l'un des circuits d'interprétation (140a, 140b).

**13.** Arrangement de circuit (100) selon l'une des revendications 11 à 12, **caractérisé en ce qu'**au moins une entrée analogique supplémentaire et/ou une entrée numérique de l'unité de calcul (200) est reliée avec au moins un point nodal du circuit d'interprétation (140a, 140b) et/ou avec au moins une surface de contact (120a, 120b, 121a, 121b, 130, 131) et/ou avec le moyen de contact (110).

**14.** Arrangement de circuit (100) selon l'une des revendications 11 à 13, **caractérisé en ce que** les signaux de sortie des deux circuits d'interprétation (140a, 140b) peuvent être interprétés pour interpréter et/ou déterminer la plausibilité de l'état de commutation du commutateur.

**15.** Commutateur comprenant un moyen de contact mobile (110), **caractérisé par** un arrangement de circuit (100) selon l'une des revendications précédentes.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0910105 A2